**Europäisches Patentamt**

**European Patent Office**

**Office européen des brevets**

(19)

(11) **EP 0 756 396 B1**

(12) **EUROPÄISCHE PATENTSCHRIFT**

(45) Veröffentlichungstag und Bekanntmachung des Hinweises auf die Patenterteilung:
**08.10.2003 Patentblatt 2003/41**

(51) Int Cl.[7]: **H04L 1/24**, H04J 3/06, H04Q 11/04

(21) Anmeldenummer: **95117370.7**

(22) Anmeldetag: **22.11.1995**

(54) **Verfahren und Vorrichtung zur Messung der Zellenlaufzeit in ATM-Netzen**

Method and device for measuring cell travel time in ATM networks

Méthode et dispositif pour mesurer le temps de propagation des cellules dans un réseau ATM

(84) Benannte Vertragsstaaten:
**BE FR GB IT NL**

(30) Priorität: **25.07.1995 DE 19527061**

(43) Veröffentlichungstag der Anmeldung:
**29.01.1997 Patentblatt 1997/05**

(73) Patentinhaber: **Deutsche Telekom AG**
**53113 Bonn (DE)**

(72) Erfinder: **Roppel, Carsten, Dipl.-Ing.**
**D-36217 Ronshausen (DE)**

(56) Entgegenhaltungen:
**US-A- 4 569 042**

- **DUDA A ET AL: "ESTIMATING GLOBAL TIME IN DISTRIBUTED SYSTEMS" INTERNATIONAL CONFERENCE ON DISTRIBUTED COMPUTING SYSTEMS, WEST BERLIN, SEPT. 21 - 25, 1987, Nr. CONF. 7, September 1987, Seiten 299-306, XP000748146 POPESCU - ZELETIN R;LE LANN G; KANE KIM K H**
- **HAAS Z: "ADAPTIVE ADMISSION CONGESTION CONTROL" COMPUTER COMMUNICATIONS REVIEW, Bd. 21, Nr. 5, 1. Oktober 1991, Seiten 58-76, XP000240808**
- **ROPPEL C: "IN-SERVICE MONITORING TECHNIQUES FOR CELL TRANSFER DELAY AND CELL DELAY VARIATION IN ATM NETWORKS" HIGH PERFORMANCE NETWORKING 6, IFIP 6TH. INTERNATIONAL CONFERENCE ON HIGH PERFORMANCE NETWORKING (HPN). PALMA DE MALLORCA, SEPT. 13 - 15, 1995, Nr. CONF. 6, 11. September 1995, Seiten 131-142, XP000624332 PUIGJANER R (ED )**

## Beschreibung

Die Erfindung betrifft ein Verfahren zur Ermittlung der Zellenlaufzeit zwischen zwei Messpunkten in einem asynchronen Netz, insbesondere einem ATM-Netz, gemäß dem Anspruch 1 sowie eine Vorrichtung zur Durchführung des Verfahrens nach Anspruch 7.

In einem ATM-Netz (ATM = Asynchroner Transfer-Modus) erfolgt die Übertragung von Informationen in gleich langen Blöcken, sogenannten Zellen, die nach bekannten asynchronen Zeitmultiplexverfahren erzeugt werden. Jede Zelle besteht aus einem Kopf von 5 Byte und einem Informationsfeld von 48 Byte. Die Laufzeiten, die die zwischen einem Ursprungsort und einem Zielort zu übertragenden Zellen erfahren, können infolge von Verzögerungen in Übertragungsmedien, festen Schaltverzögerungen in Vermittlungseinrichtungen und von Verzögerungen in Zellpuffern unterschiedlich sein. Diese sogenannte Zellenlaufzeit ist ein wesentlicher Leistungsparameter eines asynchronen Netzes und darf einen maximalen, dienstspezifischen Wert nicht überschreiten. Es sind Verfahren entwickelt worden, die die Messung der Zellenlaufzeit zwischen zwei Messpunkten (z. B. Vermittlungsstellen oder Netzknoten) ermöglichen.

Es ist bekannt, dass zur Messung der Zellenlaufzeit zwischen zwei Messpunkten (z. B. Netzknoten) eine Testzelle mit einer Sendezeitmarke im Informationsfeld versehen und in die zu überwachende Verbindung eingefügt wird. Diese Zelle wird am Zielmesspunkt empfangen, an dem auch der Empfangszeitpunkt registriert wird. Sind die Uhren der beiden Messpunkte, die jeweils die Sende- und Empfangszeitmarken liefern, synchronisiert, kann die Zellenlaufzeit einfach durch Bilden der Differenz von Empfangs- und Sendezeitmarke ermittelt werden. Man bezeichnet zwei Uhren dann als synchron, wenn sowohl der Gang als auch der Stand der beiden Uhren übereinstimmen.

Darüber hinaus ist bekannt, dass räumlich entfernte Uhren durch Empfang und Auswertung von Zeitcodes des satellitengestützten Navigationssystems GPS (GPS von Global Positioning System) synchronisiert werden können. Dazu müssen die Netzelemente jedoch mit GPS-Empfängern ausgerüstet werden, was mit entsprechenden Kosten für Geräte und deren Wartung verbunden ist.

Ferner geht aus einem Artikel von Duda et al. in IEEE 1987 XP 000748146 ein theoretisches Modell hervor, nach dem in verteilten Systemen ein Zeit- und Frequenzversatz einer approximierten Uhr bestimmt werden kann.

Daneben ist aus der US 4 569 042 ein Verfahren zur Bestimmung der Zellenlaufzeiten ohne Zeitsynchronisierung bekannt, das auf der Messung des sogenannten "round-trip delays" basiert. Hierbei werden mit Zeitmarkern versehene Zellen von einem Knoten auf einen anderen Knoten zurückgeschleift. Der Schätzwert für die Zellenlaufzeit ist dann das arithmetische Mittel aus der "round-trip transition delay time" eines Paketes. Problematisch bei diesem Verfahren ist insbesondere die Genauigkeit der Messung bei sehr weit verzweigten Netzen.

Der Erfindung liegt daher die Aufgabe zugrunde, ein verbessertes Verfahren und eine Vorrichtung zur Verfügung zu stellen, mit denen die Zellenlaufzeit ermittelt werden kann, ohne die Uhren an den entsprechenden Messpunkten synchronisieren zu müssen.

Dieses technische Problem löst die Erfindung mit den Schritten des Verfahrensanspruchs 1 und den Einrichtungen des Vorrichtungsanspruchs 7.

Erfindungsgemäß werden zwischen zwei vorbestimmten Messpunkten (das können beliebige Netzelementen sein) eine Vielzahl von Testzellen in beiden Richtungen ausgetauscht. Für jede abgehende Zelle wird an dem Ursprungsmesspunkt der dazu gehörige Sendezeitpunkt gemessen und gegebenenfalls gespeichert. Für jede an dem anderen Messpunkt ankommende Zelle wird ihr Empfangszeitpunkt gemessen und gegebenenfalls gespeichert. In vorteilhafter Weise werden die Sendezeitpunkte bzw. Empfangszeitpunkte als Zeitmarken in das Informationsfeld der entsprechenden Zellen geschrieben, damit sie an den jeweiligen Messpunkten zur Bestimmung der Laufzeit bereitstehen. Danach wird der Frequenzversatz zwischen den Zeitgebern an den beiden Messpunkten aus den gemessenen Sende- und Empfangszeitpunkten geschätzt. Der Frequenzversatz oder Frequenzoffset beschreibt den Gangunterschied des Zeitgebers eines Messpunktes relativ zu dem Zeitgeber eines anderen Messpunktes. Anschließend wird der Zeitversatz zwischen den Zeitgebern an den beiden Messpunkten aus dem zuvor geschätzten Frequenzversatz und dem Sende- und Empfangszeitpunkt wenigstens einer Testzelle geschätzt. Der Zeitversatz oder Zeitoffset beschreibt dabei den Stand des Zeitgebers an einem Messpunkt relativ zu dem Stand des Zeitgebers an dem anderen Messpunkt zu Beginn der Laufzeitmessung. Ein verbesserter Schätzwert für den Zeitversatz zwischen den beiden Zeitgebern ergibt sich, wenn zunächst wenigstens ein Wert aus den gemessenen Sende- und Empfangszeitpunkten, die paarweise je einer Testzelle zugeordnet sind, und aus dem geschätzten Frequenzversatz bestimmt wird, wobei der so ermittelte Wert einer minimalen Laufzeit zwischen den beiden Messpunkten entspricht. Mit Hilfe dieses ermittelten Wertes für eine minimale Laufzeit wird dann der Zeitversatz geschätzt. Es wird wenigstens ein Wert sowohl für die Aufwärts- als auch für die Abwärtsrichtung zwischen den beiden vorbestimmten Messpunkten benötigt.

Die Schätzung des Frequenz- und Zeitversatzes erfolgt durch eine lineare Regressionsanalyse der gemessenen Sendeund Empfangszeitpunkte auf der Grundlage kleinster Fehlerquadrate. Eine Auswerte- und Recheneinheit, die in wenigstens einem Netzelement implementiert ist, ermittelt die Zellenlaufzeit aus dem geschätzten Frequenzversatz, dem geschätzten Zeitversatz und aus den gemessenen Sende- und Empfangszeitpunkten der Testzellen für die Aufwärts- und Abwärtsrichtung der jeweiligen Testzelle.

Vorteilhafterweise wird die Zellenlaufzeit für die Aufund Abwärtsrichtung einer Zelle zwischen zwei vorbestimmten Messpunkten durch die Gleichung

$$\hat{D}_{ui} = \frac{\varphi_{ui} - \Delta \hat{T}_0}{1 + \hat{\alpha}} - t_{ui}$$

bzw.

$$\hat{D}_{di} = t_{di} - \frac{\varphi_{di} - A \hat{T}_0}{1 + \hat{\alpha}}$$

berechnet.

Eine besonders einfache Ermittlung der Zellenlaufzeit ist möglich, wenn in die an einem Messpunkt ankommende Zelle der Empfangszeitpunkt eingetragen und diese im wesentlichen ohne Verzögerung zu dem Ursprungsmesspunkt zurückgesendet wird. In diesem Fall stehen alle für die Auswertung erforderlichen Messwerte an dem Ursprungsmesspunkt zur Verfügung. Denn der für die ankommende (in Aufwärtsrichtung übertragene) Zelle gemessene Empfangszeitpunkt entspricht dann dem Sendezeitpunkt der in Abwärtsrichtung übermittelten Zelle an diesem Messpunkt.

Bevor allerdings Testzellen zwischen zwei vorbestimmten Messpunkten oder Netzelementen übertragen werden, wird einer der beiden Messpunkte als Bezugsmesspunkt und damit der diesem Messpunkt zugeordnete Zeitgeber als Bezugszeitgeber ausgewählt.

Die Erfindung wird nachfolgend anhand eines Ausführungsbeispiels in Verbindung mit den beiliegenden Zeichnungen näher erläutert. Es zeigen:

Fig. 1 ein vereinfachtes schematisches Blockschaltbild zur Messung der Zellenlaufzeit zwischen zwei vorbestimmten Netzelementen und eine beispielhafte Darstellung des Zusammenhangs zwischen den Sende- und Empfangszeitmarken in einem Weg-Zeit-Diagramm und

Fig. 2 eine beispielhafte graphische Darstellung der gemessenen Zeitpunkte in einer $(t, \varphi\text{ -}t)$-Ebene.

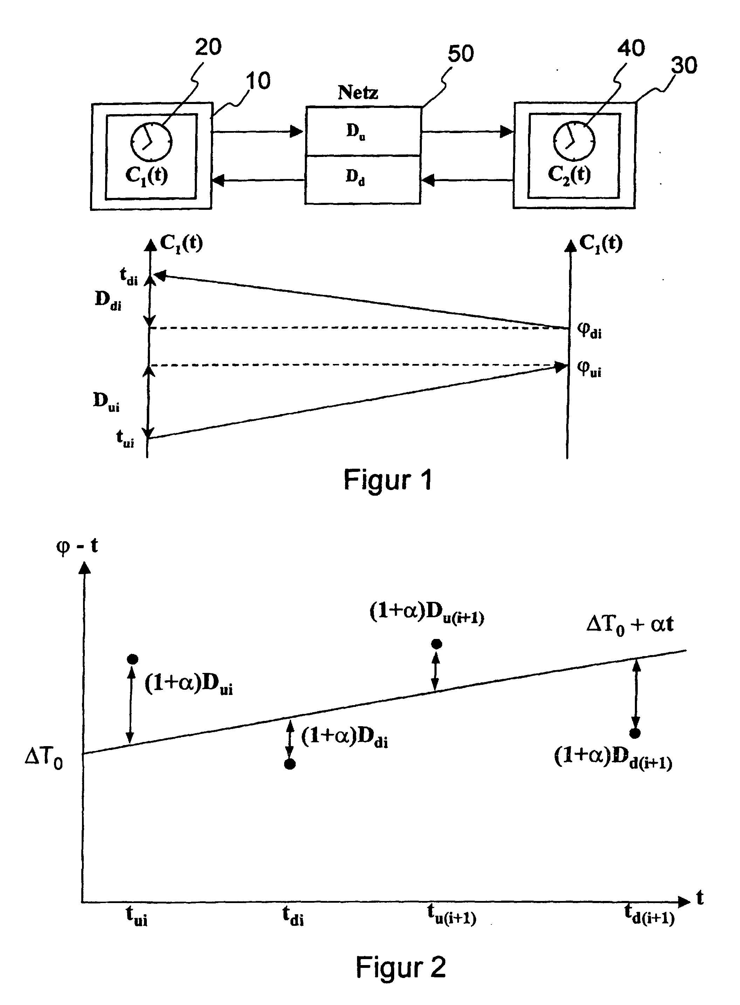

In Fig. 1 sind zwei Netzelemente 10, 30 dargestellt, die Bestandteile eines asynchronen Netzes 50, beispielsweise eines ATM-Netzes, sind. Bei den Netzelementen 10, 30 kann es sich um Vermittlungsstellen handeln. Natürlich umfasst das ATM-Netz 50 eine Vielzahl von derartigen Netzelementen 10, 30. In jeder Vermittlungsstelle 10, 30 ist ein Zeitgeber in Form einer Uhr 20, 40 angeordnet. Die Uhr 20 erzeugt die Zeit $C_1(t)$ und die Uhr 40 liefert die Zeit $C_2(t)$. Darüber hinaus befindet sich in jeder Vermittlungsstelle 10, 30 wenigstens ein Puffer zum Zwischenspeichern wenigstens einer Zelle, wenigstens ein Speicher zum Ablegen der von den Uhren 20, 40 gelieferten Sende- und/oder Empfangszeitpunkte, auf die weiter unten noch näher eingegangen wird. Ferner ist wenigstens in der Vermittlungsstelle 10 eine nicht dargestellte Auswerte- und Recheneinheit installiert, auf deren Funktionsweise später noch ausführlich eingegangen wird. Für die weitere Beschreibung sei angenommen, dass die Vermittlungsstelle 10 und damit die Uhr 20 als Referenzelement betrachtet werden. Selbstverständlich kann jede Vermittlungsstelle 10, 30 eine Auswerte- und Recheneinheit aufweisen, die die Zellenlaufzeit beispielsweise zwischen den Vermittlungsstellen 10 und 30 berechnen kann. Ganz allgemein beschreibt die Zellenlaufzeit die Verzögerung, die eine Zelle beim Transport zwischen Netzelementen, im vorliegenden Fall zwischen den Netzelementen 10 und 30, erfährt. Die Zellenlaufzeit zwischen den Vermittlungsstellen bzw. Messpunkten 10, 30 ist definiert als die Zeit $D = t_2 - t_1$ zwischen dem Zeitpunkt $t_1$, wenn das erste Bit einer ATM-Zelle den Messpunkt 10 verlassen hat, und dem Zeitpunkt $t_2$, wenn das letzte Bit der Zelle den Messpunkt 30 überquert hat. Die Zellenlaufzeit setzt sich zusammen aus Verzögerungen in Übertragungseinrichtungen, beispielsweise den Netzverbindungen 50 zwischen den beiden Vermittlungsstellen 10, 30, festen Schaltverzögerungen in Vermittlungen sowie Verzögerungen in Zellpuffern. Dabei wird die Verzögerung in den Übertragungseinrichtungen wesentlich durch die endliche Ausbreitungsgeschwindigkeit des Signals im physikalischen Medium bestimmt. Zusätzlich beeinflussen feste Verarbeitungszeiten in den Übertragungseinrichtungen die Zellenlaufzeit. Die feste Schaltverzögerung einer Vermittlungsstelle ist die minimale Verzögerung, die eine Zelle beim Durchlaufen einer Vermittlungsstelle bzw. eines Knotens erfährt. Sie wird unter anderem durch das Abfragen von Übersetzungstabellen und Laufzeiten in den Übermittlungseinrichtungen bestimmt. Die Zellenlaufzeit berücksichtigt auch die Wartezeit in Zellpuffern, die in ATM-Vermittlungsstellen als Zwischenspeicher, zur Bitratenanpassung und zur Beeinflussung des Verkehrsaufkommens benötigt werden.

Es wird nunmehr das Schätzverfahren gemäß der Erfindung zur Berechnung der Zellenlaufzeit ausführlicher geschildert. Die als Bezugspunkt ausgewählte Vermittlungsstelle 10 leitet das Messverfahren ein, indem sie zu vorbestimmten Zeitpunkten Testzellen einem Strom von Nutzzellen hinzufügt, mit denen die für die Ermittlung der Zellenlaufzeit notwendigen Sendeund Empfangszeitpunkte sowohl für die Aufwärtsrichtung (das entspricht der Übertragungsrichtung einer Zelle von der Vermittlungsstelle 10 zur Vermittlungsstelle 30) als auch für die Abwärtsrichtung (das ist die Übertragungsrichtung einer Zelle von der Vermittlungsstelle 30 zur Vermittlungsstelle 10) gemessen werden. Die Laufzeit einer Testzelle kann dann als Stichprobe der Laufzeit der Nutzzellen betrachtet werden. Zunächst wird in der Vermittlungsstelle 10 der Sendezeitpunkt bzw. die Sendezeitmarke $t_{ui}$ für eine in Aufwärtsrichtung zu übermittelnde Testzelle von der Uhr 20 abgelesen und je nach Implementierung der Netzelemente 10, 20 gespeichert und/oder in die Testzelle geschrieben. Diese Zelle erfährt auf dem Weg zur Vermittlungsstelle 30 eine Verzögerung, so dass sie in der Vermittlungsstelle 30 zu einem Empfangszeitpunkt $\varphi_{ui}$ eintrifft, der von der Uhr 40 abgelesen wird. Nach einer vorteilhaften Ausführungsform wird dieser Empfangszeitpunkt sofort in diese Zelle eingetragen, wobei die Zelle im wesentlichen ohne Verzögerung zur Vermittlungsstelle 10 zurückgeschickt wird. Die Verarbeitungszeit der Testzelle in der Vermittlungsstelle 30 sei dabei vernachlässigbar. Damit ist sichergestellt, dass der Empfangszeitpunkt $\varphi_{ui}$, der für die aufwärtsgerichtete Zelle gemessen worden ist, gleich dem Sendezeitpunkt $\varphi_{di}$ ist, der für die abwärtsgerichtete Zelle von der Uhr 40 geliefert worden ist. In Abwärtsrichtung erfährt diese Testzelle wiederum eine Verzögerung, so dass sie in der Vermittlungsstelle 10 zu einem Empfangszeitpunkt $t_{di}$ eintrifft, den die Uhr 20 liefert (s. Weg-Zeit-Diagramm in Fig. 1). Statt dieselbe Zelle in Auf- und Abwärtsrichtung zu übertragen, können auch unterschiedliche Zellen für die entsprechenden Richtungen übermittelt werden, um Sende- und Empfangszeitpunkte zur Ermittlung der Zellenlaufzeit für die i Auf- bzw. Abwärtsrichtung zu erhalten.

Sind die Uhren 20 und 40 in den Vermittlungsstellen 10 und 30 synchronisiert, kann die Zellenlaufzeit einfach durch Bilden der Differenz des Empfangszeitpunktes der Vermittlungsstelle 30 und des Sendezeitpunktes der Vermittlungsstelle 10 ermittelt werden. Der Kern der Erfindung liegt aber gerade darin, ohne synchronisierte Uhren 20, 40 die Zellenlaufzeit zu ermitteln. Dazu ist es erforderlich, wie nachfolgend ausgeführt wird, den relativen Frequenz- und Zeitversatz zwischen den Uhren 20 und 40 mit Hilfe einer linearen Regressionsanalyse aller gemessener Sende- und Empfangszeitpunkte, die einer Vielzahl von Testzellen zugeordnet sind, zu schätzen.

Zunächst sei ein mathematisches Modell der Uhr 40 angegeben, die zu einem Zeitpunkt t einen Zeit- und Frequenzversatz bezüglich der Uhr 20 aufweist: Die Gleichung dazu lautet:

$$C_2(t) = t + \Delta T_0 + \alpha\,(t - t_0)\,.$$

$\Delta T_0$ ist der Zeitversatz zum Zeitpunkt $t_0$ (das ist der Beginn der Messung), und $\alpha$ ist der Frequenzversatz des lokalen Oszillators der Uhr 40. Der Frequenz- und Zeitversatz kann nur geschätzt werden, wenn alle Zeitpunkte $t_{ui}$, $\varphi_{ui}$, $t_{di}$ und $\varphi_{di}$ bekannt sind. Es sei noch einmal betont, dass es sich bei diesen Zeitpunkten um die gemessenen Sende- und Empfangszeitpunkte in den beiden Vermittlungsstellen 10 bzw. 30 für die Auf- und Abwärtsrichtung mehrerer Testzellen handelt. Die gemessenen Zeitpunkte werden als Wertepaare $(t_{ui}, \varphi_{ui} - t_{ui})$ und $(t_{di}, \varphi_{di} - t_{di})$ in der $(t,\ \varphi\text{-}t)$-Ebene dargestellt, wie dies in Fig. 2 gezeigt ist. Mit Hilfe dieser Wertepaare können mit einer linearen Regressionsanalyse der Frequenz- und Zeitversatz der Uhr 40 bezüglich der Uhr 20 geschätzt werden. Dabei werden die durch eine Messung erhaltenen Zeitpunkte nach der Methode der kleinsten Fehlerquadrate an eine Gerade $\Delta T_0 + \alpha t$ angepasst (s. Fig. 2). Werden beispielsweise die Sende- und Empfangszeitpunkte von n Testzellen für die Auf- und Abwärtsrichtung gemessen und registriert, so erhält man 2*n Wertepaare, und der Schätzwert $\hat{\alpha}$ des Frequenzversatzes ist gegeben durch:

$$\hat{\alpha} = \frac{\frac{1}{2n}\left(\sum_{i=1}^{n} t_{ui}(\varphi_{ui} - t_{ui}) + \sum_{i=1}^{n} t_{di}(\varphi_{di} - t_{di})\right) - \overline{t}\,\overline{\varphi - t}}{\frac{1}{2n}\left(\sum_{i=1}^{n} t_{ui}^{\,2} + \sum_{i=1}^{n} t_{di}^{2}\right) - \overline{t}^{\,2}}$$

.

wobei

$$\overline{t} \;=\; \frac{1}{2n}\left(\sum_{i=1}^{n} t_{ui} + \sum_{i=1}^{n} t_{di}\right)$$

und

$$\overline{\varphi - t} = \frac{1}{2n} \left( \sum_{i=1}^{n} (\varphi_{ui} - t_{ui}) + \sum_{i=1}^{n} (\varphi_{di} - t_{di}) \right)$$

ist. Mit der oben angesprochenen linearen Regressionsanalyse kann auch ein Schätzwert für den Zeitversatz $\Delta T_0$ aus allen gemessenen Sende- und Zeitpunkten sowie dem geschätzten Frequenzversatz gemäß der Gleichung $\Delta \hat{T}_0 = \overline{\varphi \cdot t} - \hat{\alpha} \, \overline{t}$ berechnet werden. Dieser Schätzwert entspricht jedoch nur dann dem tatsächlichen Wert, wenn die Laufzeiten der Zellen in Aufwärts- und Abwärtsrichtung im Mittel gleich sind. Ein besserer Schätzwert für den Zeitversatz ergibt sich, wenn man aus den gemessenen Sende- und Empfangszeitpunkten die minimale Laufzeit wenigstens einer zwischen den Vermittlungsstellen 10 und 30 übertragenen Zelle bestimmt. Die minimale Laufzeit einer Zelle zwischen der Vermittlungsstelle 10 und 30 wird durch die physikalischen Übertragungseinrichtungen bestimmt, die für beide Zellenlaufrichtungen gleich sind. Werden viele Testzellen gesendet, so zeigen einige von ihnen eine Laufzeit, die gleich oder nahezu gleich dieser minimalen Laufzeit ist. Die Werte für die minimalen Laufzeiten sind dann gegeben durch:

$$\text{Min} \left\{ \frac{\varphi_{ui}}{1 + \hat{\alpha}} - t_{ui} \right\}, \quad \text{Max} \left\{ \frac{\varphi_{di}}{1 + \hat{\alpha}} - t_{di} \right\}$$

Es sei angenommen, dass m Werte für m minimale Laufzeiten ermittelt worden sind. Für den Zeitversatz gilt dann folgende Gleichung:

$$\Delta \hat{T}_0 = (1 + \hat{\alpha}) \frac{1}{2} \left( \frac{1}{m} \sum_{j=1}^{m} \frac{\varphi_{uj}}{1 + \hat{\alpha}} - t_{uj} + \frac{1}{m} \sum_{j=1}^{m} \frac{\varphi_{dj}}{1 + \hat{\alpha}} - t_{dj} \right)$$

Im Prinzip würden zwei Werte zur Bestimmung des Zeitversatzes genügen, d.h. m=1, sofern diese Werte exakt der minimalen Laufzeit entsprächen. Im allgemeinen wird man jedoch m>1 wählen, so dass sich geringe Abweichungen von der minimalen Laufzeit ausgleichen.

Mit den auf diese Weise ermittelten Schätzwerten für den Zeit- und Frequenzversatz der Uhr 40 der Vermittlungsstelle 30 bezüglich der Uhr 20 der Vermittlungsstelle 10 ergeben sich die Werte für die Zellenlaufzeiten für die Auf- und Abwärtsrichtung einer Zelle zwischen den beiden Vermittlungsstellen 10 und 30 aus:

$$\hat{D}_{ui} = \frac{\varphi_{ui} - \Delta \hat{T}_0}{1 + \hat{\alpha}} - t_{ui}$$

bzw.

$$\hat{D}_{di} = t_{di} - \frac{\varphi_{di} - \Delta \hat{T}_0}{1 + \hat{\alpha}}$$

Es wurde ein Verfahren erläutert, das es gestattet, Zellenlaufzeiten zwischen zwei Messpunkten zu ermitteln, ohne synchronisierte Uhren an den Messpunkten installieren zu müssen. Das Verfahren basiert auf einer linearen Regressionsanalyse, mit deren Hilfe der Zeit- und Frequenzversatz zwischen den Uhren in den beiden Vermittlungsstellen 10 und 30 geschätzt werden können.

**Patentansprüche**

1. Verfahren zur Ermittlung der Zellenlaufzeit zwischen zwei Messpunkten in einem asynchronen Netz, insbesondere einem ATM-Netz, wobei an jedem Messpunkt ein Zeitgeber angeordnet ist, folgende Schritte umfassend:

   a) bidirektionales Übertragen einer Vielzahl von Zellen zwischen den beiden Messpunkten,
   b) Messen des Sendezeitpunktes ($t_{ui}$, $\varphi_{di}$) einer abgehenden Zelle (i),
   c) Messen des Empfangszeitpunktes ($\varphi_{ui}$, $t_{di}$) der ankommenden Zelle (i),
   d) Wiederholen der Schritte b) und c) für jede Zelle,
   e) Schätzen des Frequenzversatzes ($\hat{\alpha}$) zwischen den Zeitgebern an den beiden Messpunkten aus den gemessenen Sende- und Empfangszeitpunkten,
   f') Bestimmen von wenigstens einem Wert aus den gemessenen Sende- und Empfangs Zeitpunkten, die paarweise je einer Zelle zugeordnet sind, und dem geschätzten Frequenzversatz, wobei der bestimmte Wert einer minimalen Laufzeit zwischen den beiden Messpunkten entspricht.
   g) Ermitteln der Zellenlaufzeit ($D_{ui}$, $D_{di}$) aus dem geschätzten Frequenzversatz, dem geschätzten Zeitversatz und aus dem gemessenen Sende- und Empfangszeitpunkt der Zelle (i) für die Aufwärtsund/oder Abwärtsrichtung **und wenigstens einer** minimalen Laufzeit.

2. Verfahren zur Ermittlung der Zellenlaufzeit nach Anspruch 1, **dadurch gekennzeichnet,**
   **dass** in Schritt e) der Frequenzversatz und in Schritt f) der Zeitversatz durch eine lineare Regressionsanalyse der gemessenen Sende- und Empfangszeitpunkte auf der Grundlage kleinster Fehlerquadrate ermittelt werden.

3. Verfahren zur Ermittlung der Zellenlaufzeit nach Anspruch 1 oder 2, **dadurch gekennzeichnet,**
   **dass** die Zellenlaufzeit für die Auf- und Abwärtsrichtung einer Zelle durch die Gleichung

$$\hat{D}_{ui} = \frac{\varphi_{ui} - \Delta \hat{T}_0}{1 + \hat{\alpha}} - t_{ui}$$

bzw.

$$\hat{D}_{di} = t_{di} - \frac{\varphi_{di} - \Delta \hat{T}_0}{1 + \hat{\alpha}}$$

ermittelt werden, wobei

$\hat{D}_{ui}$ die Zellenlaufzeit für eine in Aufwärtsrichtung übertragene Zelle (i) ist,
$D_{di}$ die Zellenlaufzeit für eine in Abwärtsrichtung übertragene Zelle (i) ist,
$t_{ui}$ der Sendezeitpunkt einer aufwärtsgerichteten Zelle an einem ersten Messpunkt ist,
$\varphi_{ui}$ der Empfangszeitpunkt der aufwärtsgerichteten Zelle an einem zweiten Messpunkt ist,
$\varphi_{di}$ der Sendezeitpunkt einer abwärtsgerichteten Zelle an dem zweiten Messpunkt ist,
$t_{di}$ der Empfangszeitpunkt der abwärtsgerichteten Zelle an dem ersten Messpunkt ist,
$\hat{\alpha}$ der geschätzte Frequenzversatz und
$\Delta T_0$ der geschätzte Zeitversatz ist.

4. Verfahren zur Ermittlung der Zellenlaufzeit nach einem der Ansprüche 1 bis 3,
   **dadurch gekennzeichnet, daß** im Schritt f') wenigstens ein Wert minimaler Laufzeit für die Auf- und Abwärtsrichtung einer Zelle bestimmt wird

5. Verfahren zur Ermittlung der Zellenlaufzeit nach einem der Ansprüche 1 bis 4,
   **dadurch gekennzeichnet, dass** in die an einem Messpunkt ankommende Zelle der Empfangszeitpunkt eingetragen und die Zelle im wesentlichen ohne Verzögerung zu dem anderen Messpunkt zurückgesendet wird.

6. Verfahren zur Ermittlung der Zellenlaufzeit nach einem der Ansprüche 1 bis 5,
   **dadurch gekennzeichnet, dass** ein Messpunkt als Bezugsmesspunkt ausgewählt wird.

**7.** Vorrichtung zur Durchführung des Verfahrens nach einem der Ansprüche 1 bis 6,
**dadurch gekennzeichnet, dass** an mehreren Messpunkten des asynchronen Netzes je folgende Einrichtungen angeordnet sind:

ein Zeitgeber (20, 40) zum Messen der Sende- und Empfangszeitpunkte von Zellen, die zwischen zwei vorbestimmten Messpunkten (10, 30) ausgetauscht werden,
wenigstens ein Puffer zum Zwischenspeichern wenigstens einer Zelle,
wenigstens ein Speicher zum Ablegen der gemessenen Sende- und/oder Empfangszeitpunkte, und

dass an wenigstens einem Messpunkt (10) eine Auswerte- und Recheneinheit vorgesehen ist, die aus den gemessenen Sende- und Empfangszeitpunkten einen Frequenzversatz und einen Zeitversatz zwischen den Zeitgebern (20, 40) der beiden vorbestimmten Messpunkte (10, 30) ermitteln und unter Verwendung des ermittelten Frequenz- und Zeitversatzes und der gemessenen Sendeund Empfangszeitpunkte die Zellenlaufzeit für die Aufund/oder Abwärtsrichtung bestimmen kann.

**8.** Vorrichtung nach Anspruch 7,
**dadurch gekennzeichnet, dass** die Auswerte- und Recheneinheit die Zellenlaufzeit für die Auf- und Abwärtsrichtung nach der Gleichung:

$$\hat{D}_{ui} = \frac{\varphi_{ui} - \Delta\hat{T}_0}{1 + \hat{\alpha}} - t_{ui}$$

bzw.

$$\hat{D}_{di} = t_{di} - \frac{\varphi_{di} - \Delta\hat{T}_0}{1 + \hat{\alpha}}$$

ermittelt, wobei:

$\hat{D}_{ui}$ die Zellenlaufzeit für eine in Aufwärtsrichtung übertragene Zelle (i) ist,
$D_{di}$ die Zellenlaufzeit für eine in Abwärtsrichtung übertragene Zelle (i) ist,
$t_{ui}$ der Sendezeitpunkt einer aufwärtsgerichteten Zelle an einem ersten Messpunkt ist,
$\varphi_{ui}$ der Empfangszeitpunkt der aufwärtsgerichteten Zelle an einem zweiten Messpunkt ist,
$\varphi_{di}$ der Sendezeitpunkt einer abwärtsgerichteten Zelle an dem zweiten Messpunkt ist,
$t_{di}$ der Empfangszeitpunkt der abwärtsgerichteten Zelle an dem ersten Messpunkt ist,
$\hat{\alpha}$ der geschätzte Frequenzversatz und
$\Delta\hat{T}_0$ der geschätzte Zeitversatz ist.

**Claims**

**1.** Method for calculating the cell propagation delay between two measuring points in an asynchronous network, particularly an ATM network, a timing element being disposed at each measuring point,
comprising the following steps:

a) bidirectional transmission of a multiplicity of cells between the two measuring points;
b) measuring of the transmitting instant ($t_{ui}$, $\varphi_{di}$) of an outgoing cell (i);
c) measuring of the receiving instant ($\varphi_{ui}$, $t_{di}$) of the incoming cell (i);
d) repeating of steps b) and c) for each cell;
e) estimating of the frequency shift ($\hat{\alpha}$) between the timing elements at the two measuring points from the measured transmitting and receiving instants;
f') determining of at least one value from the measured transmitting and receiving instants associated in pairs with each cell, and of the estimated frequency shift, the determined value corresponding to a minimum propagation delay between the two measuring points;
g) calculating of the cell propagation delay ($D_{ui}$, $D_{di}$) from the estimated frequency shift, the estimated time skew and the measured transmitting and receiving instants of the cell (i) for the up and/or down directions and

**EP 0 756 396 B1**

at least a minimum propagation delay.

2. Method for calculating the cell propagation delay according to claim 1, **characterized in that** in step e) the frequency shift and in step f) the time skew are calculated by a linear regression analysis of the measured transmitting and receiving instants on the basis of smallest error squares.

3. Method for calculating the cell propagation delay according to claim 1 or 2, **characterized in that** the cell propagation delay for the up and down directions of a cell are calculated by the equation

$$\hat{D}_{ui} = \frac{\varphi_{ui} - \Delta \hat{T}_0}{1 + \hat{\alpha}} - t_{ui}$$

or

$$\hat{D}_{di} = t_{di} - \frac{\varphi_{di} - A\hat{T}_0}{1 + \hat{\alpha}}$$

where

$\hat{D}_{ui}$ is the cell propagation delay for a cell (i) transmitted in the up direction;
$D_{di}$ is the cell propagation delay for a cell (i) transmitted in the down direction;
$t_{ui}$ is the transmitting instant of an up-directed cell at a first measuring point;
$\varphi_{ui}$ is the receiving instant of the up-directed cell at a second measuring point;
$\varphi_{di}$ is the transmitting instant of a down-directed cell at the second measuring point;
$t_{di}$ is the receiving instant of the down-directed cell at the first measuring point;
$\hat{\alpha}$ is the estimated frequency shift and
$\Delta T_0$ is the estimated time skew.

4. Method for calculating the cell propagation delay according to any one of claims 1 to 3, **characterized in that** in step f") at least one value of minimum propagation delay is determined for the up and down directions of a cell.

5. Method for calculating the cell propagation delay according to any one of claims 1 to 4, **characterized in that** the receiving instant is entered in the cell arriving at a measuring point and the cell is sent back substantially without delay to the other measuring point.

6. Method for calculating the cell propagation delay according to any one of claims 1 to 5, **characterized in that** a measuring point is selected as a reference measuring point.

7. Device for implementing the method according to any one of claims 1 to 6, **characterized in that** the following means are disposed at each of a plurality of measuring points of the asynchronous network:

   a timing element (20, 40) for measuring the transmitting and receiving instants of cells exchanged between two predetermined measuring points (10, 30);
   at least one buffer for temporary storage of at least one cell;
   at least one memory for storing the measured transmitting and/or receiving instants; and
   **in that** an evaluation and computing unit is provided at at least one measuring point (10), said evaluation and computing unit being capable of calculating from the measured transmitting and receiving instants a frequency shift and a time skew between the timing elements (20, 40) of the two predetermined measuring points (10, 30) and being capable, using the calculated frequency shift and time skew and the measured transmitting and receiving instants, of determining the cell propagation delay for the up and/or down directions.

8. Device according to claim 7, **characterized in that** the evaluation and computing unit calculates the cell propagation delay for the up and down directions according to the equation:

$$\hat{D}_{ui} = \frac{\varphi_{ui} - \Delta \hat{T}_0}{1 + \hat{\alpha}} - t_{ui}$$

or

$$\hat{D}_{di} = t_{di} - \frac{\varphi_{di} - A\hat{T}_0}{1 + \hat{\alpha}}$$

where

$\hat{D}_{ui}$ is the cell propagation delay for a cell (i) transmitted in the up direction;
$D_{di}$ is the cell propagation delay for a cell (i) transmitted in the down direction;
$t_{ui}$ is the transmitting instant of an up-directed cell at a first measuring point;
$\varphi_{ui}$ is the receiving instant of the up-directed cell at a second measuring point;
$\varphi_{di}$ is the transmitting instant of a down-directed cell at the second measuring point;
$t_{di}$ is the receiving instant of the down-directed cell at the first measuring point;
$\hat{\alpha}$ is the estimated frequency shift and
$\Delta T_0$ is the estimated time skew.

**Revendications**

1. Procédé pour déterminer le temps de propagation cellulaire entre deux points de mesure dans un réseau asynchrone, notamment un réseau ATM, chaque point de mesure contenant une horloge,
qui comporte les pas suivants:

   a) transmission bidirectionnelle d'une pluralité de cellules entre les deux points de mesure;
   b) mesurage de l'instant d'émission ($t_{ui}$, $\varphi_{di}$) d'une cellule au départ (i) ;
   c) mesurage de l'instant de réception ($\varphi_{ui}$, $t_{di}$) d'une cellule à l'arrivée (i);
   d) répétition des pas b) et c) pour chaque cellule;
   e) estimation du décalage de fréquence ($\hat{\alpha}$) entre les horloges aux deux points de mesure sur la base des instants d'émission et de réception mesurés;
   f) détermination d'au moins une valeur, à partir des instants d'émission et de réception mesurés et assignés par paires à chaque cellule, et estimation du décalage de fréquence, la valeur déterminée correspondant à un temps de propagation minimum entre les deux points de mesure;
   g) déduction, à partir du décalage de fréquence estimé, du décalage de temps estimé et de l'instant d'émission et de réception de la cellule (i) pour la direction ascendante et/ou descendante, du temps de propagation cellulaire ($\hat{D}_{ui}$, $\hat{D}_{di}$) et d'au moins un temps de propagation minimum.

2. Procédé pour déterminer le temps de propagation cellulaire selon la revendication 1, **caractérisé en ce que** le décalage de fréquence au pas e) et le décalage de fréquence au pas f) sont déterminés par une analyse de régression linéaire des instants d'émission et de réception sur la base des plus petits carrés des erreurs.

3. Procédé pour déterminer le temps de propagation cellulaire selon l'une des revendications 1 ou 2,
**caractérisé en ce que** le temps de propagation cellulaire pour la direction ascendante et descendante d'une cellule est déduit de l'équation

$$\hat{D}_{ui} = \frac{\varphi_{ui} - \Delta \hat{T}_0}{1 + \hat{\alpha}} - t_{ui}$$

ou

$$\hat{D}_{di} = t_{di} - \frac{\varphi_{di} - A\hat{T}_0}{1 + \hat{\alpha}}$$

où

$\hat{D}_{ui}$ est le temps de propagation cellulaire d'une cellule (i) transmise en direction ascendante,
$D_{di}$ est le temps de propagation cellulaire d'une cellule (i) transmise en direction descendante,
$t_{ui}$ est l'instant d'émission d'une cellule montant à un premier point de mesure,
$\varphi_{ui}$ est l'instant de réception de la cellule montant à un second point de mesure,
$\varphi_{di}$ est l'instant d'émission d'une cellule descendant au second point de mesure,
$t_{di}$ est l'instant de réception de la cellule descendant au premier point de mesure,
$\alpha$ est le décalage de fréquence estimé et
$\Delta T_0$ est le décalage de temps estimé.

4. Procédé pour déterminer le temps de propagation cellulaire selon l'une des revendications 1 à 3, **caractérisé en ce que**, au pas f), au moins une valeur de propagation minimum est déterminée pour la direction ascendante et descendante d'une cellule.

5. Procédé pour déterminer le temps de propagation cellulaire selon l'une des revendications 1 à 4, **caractérisé en ce que** l'instant de réception est enregistré dans une cellule arrivant à un point de mesure et la cellule est renvoyée essentiellement sans retard à l'autre point de mesure.

6. Procédé pour déterminer le temps de propagation cellulaire selon l'une des revendications 1 à 5, **caractérisé en ce qu'**un point de mesure est retenu comme point de mesure de référence.

7. Dispositif pour réaliser le procédé selon l'une des revendications 1 à 6, **caractérisé en ce que** plusieurs points de mesure du réseau asynchrone contiennent chacun les équipements suivants:

une horloge (20, 40) pour mesurer les instants d'émission et de réception des cellules échangées entre deux points de mesure prédéterminés (10, 30),

au moins une mémoire intermédiaire pour tamponner au moins une cellule,

au moins une mémoire pour stocker les instants d'émission et/ou de réception mesurés et,

à au moins un point de mesure, une unité d'exploitation et de calcul est prévue qui peut déduire, des instants d'émission et/ou de réception mesurés, un décalage de fréquence et un décalage de temps entre les horloges (20, 40) des deux points de mesure prédéterminés (10, 30) ainsi que le temps de propagation cellulaire pour la direction ascendante et/ou descendante en utilisant les décalages de fréquence et de temps déterminés et les instants d'émission et de réception mesurés.

8. Dispositif selon la revendication 7, **caractérisé en ce que** l'unité d'exploitation et de calcul déduit le temps de propagation cellulaire, pour la direction ascendante et descendante, de l'équation :

$$\hat{D}_{ui} = \frac{\varphi_{ui} - \hat{\Delta T}_0}{1 + \hat{\alpha}} - t_{ui}$$

ou

$$\hat{D}_{di} = t_{di} - \frac{\varphi_{di} - \hat{\Delta T}_0}{1 + \hat{\alpha}}$$

où

$\hat{D}_{ui}$, est le temps de propagation cellulaire d'une cellule (i) transmise en direction ascendante,
$D_{di}$ est le temps de propagation cellulaire d'une cellule (i) transmise en direction descendante,
$t_{ui}$ est l'instant d'émission d'une cellule montant à un premier point de mesure,

$\phi_{ui}$ est l'instant de réception de la cellule montant à un second point de mesure,

$\phi_{di}$ est l'instant d'émission d'une cellule descendant au second point de mesure,

$t_{di}$ est l'instant de réception de la cellule descendant au premier point de mesure,

$\alpha$ est le décalage de fréquence estimé et

$\Delta T_0$ est le décalage de temps estimé.

Figur 1

Figur 2